# EUROPEAN PATENT APPLICATION

(11) **EP 3 431 336 A1**
(43) Date of publication of application: **23.01.2019**
(21) Application number: 18172667.0
(22) Date of filing: 16.05.2018
(51) Int. Cl.: B60N 3/02

(54) **ASSIST GRIP**

(30) Priority: 23.05.2017 JP 2017102001
(71) Applicant: Howa Plastics Co., Ltd., Aichi 470-0496 (JP)
(72) Inventor: KAJIO, Hideki, Toyota-shi, Aichi 170-0496 (JP)
(74) Representative: Kramer Barske Schmidtchen Patentanwälte PartG mbB

(57) **Abstract**

An assist grip includes a grip body (1) that has hinge cavities (11, 12) respectively provided in base portions at both left and right ends and is integrally molded, hinge assemblies (2, 3) including hinge bodies (21, 31) that are rotatably mounted in the hinge cavities (11, 12) via pivot shafts (13, 14), mounting clips (5) that are formed by bending metal plates with spring resilience into substantially U shapes and are respectively inserted into rectangular openings of the hinge bodies (21, 31), and covers (4) which are fitted to the hinge bodies (21, 31) and each of which has clip support portions (42) to be inserted into the inside of the mounting clips (5). A pair of shaft portions (13, 14) are provided coaxially to project inward from both side walls facing each other on an inner peripheral wall of the hinge cavities (11, 12), bearing portions (25, 35) are respectively provided on both sides of the hinge bodies (21, 31), and shaft holes (22, 32) are respectively formed in outer wall portions of the bearing portions (25, 35) on both sides, and the shaft portions (13, 14) facing each other of the hinge cavities (11, 12) are rotatably fitted and axially supported in the shaft holes on outer wall portions of the bearing portions on both sides of the hinge bodies (21, 31).

## Description

### BACKGROUND OF THE INVENTION

### 1. FIELD OF THE INVENTION

The present invention relates to an assist grip to be mounted on a ceiling surface, a wall surface, or the like inside a vehicle compartment, and to an assist grip capable of improving durability of pivot support portions.

### 2. DESCRIPTION OF RELATED ART

Assist grips are mounted on a ceiling surface inside a vehicle compartment to provide support to the bodies of the vehicle occupants in the compartment. This kind of assist grip having such a structure that hinge cavities are formed on both sides of a grip body and hinge assemblies are rotatably mounted in the hinge cavities, and the grip body is rotatably mounted via the hinge assemblies on both sides have been used in various automobiles. On the hinge assembly of this kind of assist grip, a pair of support pieces each having a shaft hole are formed, and shaft holes are also formed in left and right walls facing each other on a peripheral wall of the hinge cavity of the grip body. To axially support the grip body on the hinge assemblies, the hinge assemblies and each shaft hole formed in the hinge cavities are coaxially disposed, and by inserting metallic pivot shafts, the hinge assemblies are axially supported rotatably in the hinge cavities. However, this assist grip looks unattractive since the metallic pivot shafts are exposed to the outer surface of the grip body.

Therefore, in JP No. 2015-085727 A, an assist grip formed so as not to expose metallic pivot shafts to the outside is proposed. This assist grip is configured so that hinge shafts projecting outward are molded integrally with a pair of support pieces of a hinge assembly, and shaft holes are formed in the respective left and right walls facing each other on a peripheral wall of a hinge cavity. According to this assist grip, by inserting the hinge shafts into the shaft holes, the hinge assemblies are axially supported rotatably in the hinge cavities, and end faces of the hinge shafts are prevented from being viewed, so that the look of the assist grip is improved. In addition, in the assist grip described in JP No. 2017-007425 A, the same configuration is adopted.

An assist grip is mounted on a ceiling surface inside a vehicle compartment and used by an occupant as a handle to support his/her body when getting in/out of a vehicle, and depending on the conditions, a considerably large load is applied to pivot support portions of a grip body. In particular, in a vehicle having a high ceiling such as a van, an assist grip may be used in a state where an occupant hangs on the assist grip in some cases, and therefore, a considerably larger deformation load is applied to the pivot support portions of the grip body.

However, in the assist grip described above, a pair of hinge shafts being pivot support portions are respectively formed to project outward from the left or right surfaces of a pair of support pieces projecting in U shapes from the hinge assemblies toward the back surface side, so that a load to be applied to the grip body is easily applied to tip end portions of the hinge shafts projecting outward from the support pieces through bearing holes on the grip body side, so that a comparatively large bending moment to be applied to the hinge assemblies is generated. In addition, since the hinge shafts are formed on the support pieces of the hinge assemblies that having both size and shape restrictions, the hinge shafts and the vicinities of root portions of the hinge shafts easily warp. Therefore, strength during use easily becomes insufficient, and when a large load is repeatedly applied to the grip body, the hinge shafts and the bearing holes are easily deformed, and therefore, the pivot support portions have a problem with durability.

### SUMMARY OF THE INVENTION

An object of the present invention is to solve the above-described problem, and to provide an assist grip capable of improving durability of pivot support portions of a grip body.

The object of the present invention can be achieved by an assist grip configured as described below.

That is, an assist grip according to the present invention includes:
a grip body that has hinge cavities provided in base portions at both left and right ends and is integrally molded;
hinge assemblies including hinge bodies that are rotatably mounted in the hinge cavities on both ends via pivot shafts;
mounting clips that are formed by bending metal plates with spring resilience into substantially U shapes and provided with resilient leg portions on both sides, and have resilient swelling-out portions swelling outward provided on the resilient leg portions, and are respectively inserted into rectangular openings provided at substantially centers of the hinge bodies; and
covers each having a pair of plate-shaped clip support portions inserted into the insides of the resilient leg portions on both sides of the mounting clip and provided to project parallel, and fitted to the hinge bodies so as to cover front faces of the hinge assemblies, where
the assist grip is mounted by inserting the mounting clips and the clip support portions of the covers into rectangular holes provided in a body panel and fixing the hinge assemblies to the body panel, wherein
a pair of shaft portions are provided coaxially to project inward from both side walls facing each other on an inner peripheral wall of the hinge cavity,
bearing portions are provided on both sides of the hinge body, and shaft holes are formed in outer wall portions of the bearing portions on both sides, and
the shaft portions are rotatably fitted and axially supported in the shaft holes.

In this specification, as an orientation of the assist grip, up, down, left, and right sides are defined when the assist grip in a mounted posture is viewed from the front side, and in the drawings, FR denotes the front side, RE denotes the rear side, UP denotes the upper side, DO denotes the down side, LE denotes the left side, and RI denotes the right side.

According to the assist grip of the present invention, on left and right walls of the inner peripheral wall of the hinge cavity provided in the grip body, a pair of shaft portions are provided coaxially to project inward and face each other, and shaft holes in which the shaft portions fit are formed in left and right outer wall portions of the hinge body, so that when using the assist grip, a load to be applied to the grip body is applied from vicinities of root portions of the shaft portions provided to project from the inner peripheral wall of the hinge cavity to peripheral wall portions of shaft holes of the bearing portions on both sides of the hinge assembly. Therefore, a bending moment to be applied to the shaft portions becomes comparatively small, and deformations of the shaft portions and the bearing portions decrease, and therefore, durability of the pivot support portions of the grip body can be improved.

Here, the assist grip described above can be configured so that inclined surfaces are formed on tip ends of the shaft portions, guide grooves reaching the shaft holes are formed on outer wall portions of the bearing portions on both sides of the hinge body, inclined surfaces and lock portions are formed on the guide grooves, and in a state where the grip body and the hinge assembly are mounted, the inclined surfaces on the tip ends of the shaft portions and the inclined surfaces of the guide grooves face each other.

With this configuration, when the hinge assembly is mounted to the grip body, the shaft portions are guided to the shaft holes by the guide grooves, and the inclined surfaces on the tip ends of the shaft portions and the inclined surfaces of the guide grooves face each other, so that the shaft portions can be easily fitted in the bearing portions, and last, the shaft portions are locked on the lock portions, and accordingly, the shaft portions can be easily held in the shaft holes. Also, when using the assist grip, the shaft portions are securely held in the shaft holes, so that load resistant strength during use can be improved.

The assist grip described above can be configured so that
inside the bearing portions of one of the hinge bodies, a coil spring stored in a spring case is disposed,
the spring case is stored in a spring case storing portion provided on an axis between the left and right shaft holes formed in the bearing portions of the one hinge body,
an L-shaped end portion bent into an L shape is provided at an end portion of the coil spring,
a slit is provided in a bottom portion arc direction of the spring case, an L-shaped end portion slit is provided at an end portion of the slit, and on the outer sides of left and right wall portions of the spring case, boss portions are provided to project and fitting projection portions are provided to project,
positioning recesses are provided on left and right inner wall portions of the spring case storing portion, and
when mounting the spring case, the fitting projection portions fit the positioning recesses, and the boss portions fit the insides of the shaft holes provided in the hinge body.

With this configuration, since the L-shaped end portion slit is formed in the slit provided in the spring case, the coil spring having the L-shaped end portion can be easily incorporated into the spring case. In addition, the boss portions are provided to project and the fitting projection portions are provided to project on the spring case, and the spring case storing portion is provided with positioning recesses, so that the fitting projection portions fit the positioning recesses, the boss portions fit the insides of the shaft holes provided in the hinge body, and the spring case can be easily incorporated into the spring case storing portion.

The assist grip described above can be configured so that
a substantially cylindrical oil damper is disposed inside the bearing portions of the other hinge body,
the oil damper is stored in an oil damper storing portion provided on an axis between the left and right shaft holes formed in the bearing portions of the other hinge body,
at each of tip end axial support positions of an inner cylinder of the oil damper, a lock claw receiver is provided and a pair of lock projection portions are provided at an interval, and on side walls of the oil damper storing portion, guide recesses are provided and lock claws are provided, and
when the oil damper is stored in the oil damper storing portion, the lock projection portions enter and fit the guide recesses, and the lock claws are locked in the lock claw receivers.

With this configuration, by the lock projection portions of the oil damper and the guide recesses of the oil damper storing portion, the oil damper can be easily mounted at an appropriate position in the oil damper storing portion, and the oil damper provided with lock claw receivers can be prevented from unexpectedly coming off the oil damper storing portion provided with lock claws.

The assist grip described above can be configured so that at axial support positions on both ends of the inner cylinder of the oil damper, recessed lock claw receivers are provided, and at positions on both sides of the lock claw receiver, a pair of lock projection portions are provided to project.

With this configuration, since a pair of lock projection portions are provided to project at positions on both sides of the lock claw receiver of the oil damper, with respect to rotation of the assist grip, the oil damper has less play, and any rattling and slowness sensation can be reduced.

### BRIEF DESCRIPTION OF THE DRAWINGS

Fig. 1 is a back view of an assist grip showing an embodiment of the present invention.
Fig. 2 is a perspective view of the same assist grip from the back side.
Fig. 3 is a bottom view of the same assist grip.
Fig. 4 is a left side view of the same assist grip.
Fig. 5 is an exploded perspective view of the same assist grip from the back side.
Fig. 6A is a back view of a grip body, and Fig. 6B is a bottom view of the same.
Fig. 7A is a perspective view of a right hinge assembly from the front side, Fig. 7B is a right side view of the same, Fig. 7C is a perspective view of the same from the back side, and Fig. 7D is a back view of the same.
Fig. 8A is a perspective view of a left hinge assembly from the front side, Fig. 8B is a right side view of the same, Fig. 8C is a perspective view of the same from the back side, and Fig. 8D is a perspective view of the same from the back side, and Fig. 8E is a back view of the same.
Fig. 9 is an exploded perspective view of the same assist grip from the right back side.
Fig. 10 is an exploded perspective view of the same assist grip from the left back side.
Fig. 11A is a sectional view taken at a position of XI-XI line in Fig. 1 when a grip body is mounted to the hinge assembly, and Fig. 11B is a sectional view taken at a position of XI-XI line, showing a state where the grip body is mounted to the hinge assembly.
Fig. 12A is a sectional view taken at a position of XII-XII line in Fig. 1 when a grip body is fitted to the hinge assembly, and Fig. 12B is a sectional view taken at a position of XII-XII line, showing a state where the grip body is fitted to the hinge assembly.
Fig. 13A is a perspective view of a spring case from the back side, Fig. 13B is a perspective view of the same from the back side, and Fig. 13C is a perspective view of the same from the front side.
Fig. 14A is a perspective view of a coil spring and the spring case from the back side, Fig. 14B is a perspective view from the back side, showing a state where the coil spring and the spring case are assembled, Fig. 14C is a perspective view of the same from the front side, and Fig. 14D is a right side view of the same.
Fig. 15A is a perspective view of an oil damper from the back side, Fig. 15B is a perspective view of the same from the front side, and Fig. 15C is a left side view of the same.
Fig. 16A is a plan view of a mounting clip, Fig. 16B is a perspective view of the same from the back side, Fig. 16C is a perspective view of the same from the front side, Fig. 16D is a back view of the same, and Fig. 16E is a right side view of the same.
Fig. 17A is a plan view of a cover, Fig. 17B is a right side view of the same, Fig. 17C is a bottom view of the same, Fig. 17D is a perspective view of the same from the back side, and Fig. 17E is a perspective view of the same from the bottom side.
Fig. 18A is a perspective view of a right hinge assembly to which the mounting clip is assembled, viewed from the back side, and Fig. 18B is a right side view of the same.
Fig. 19A is a perspective view of a left hinge assembly to which the mounting clip is assembled, viewed from the back side, and Fig. 19B is a right side view of the same.
Fig. 20A is a perspective view when the right hinge assembly is assembled to a hinge cavity of the grip body, and Fig. 20B is a perspective view when the left hinge assembly is assembled to a hinge cavity of the grip body.
Fig. 21A is an explanatory sectional view when the assist grip is mounted in a rectangular hole of a vehicle-body-side body panel, and Fig. 21B is an explanatory sectional view showing a state where the assist grip is mounted in the rectangular hole of the vehicle-body-side body panel.
Fig. 22 is a sectional view taken along XXII-XXII in Fig. 1, showing a use state of the assist grip.
Fig. 23 is a sectional view taken along XXIII-XXIII in Fig. 1, showing a use state of the assist grip.

### DESCRIPTION OF THE PREFERRED EMBODIMENTS

Hereinafter, the present invention is described based on an embodiment shown in the drawings. The present invention is not limited to the embodiment. Various changes in requirements of claims or equivalents relating thereto shall be included in the scope of the claims.

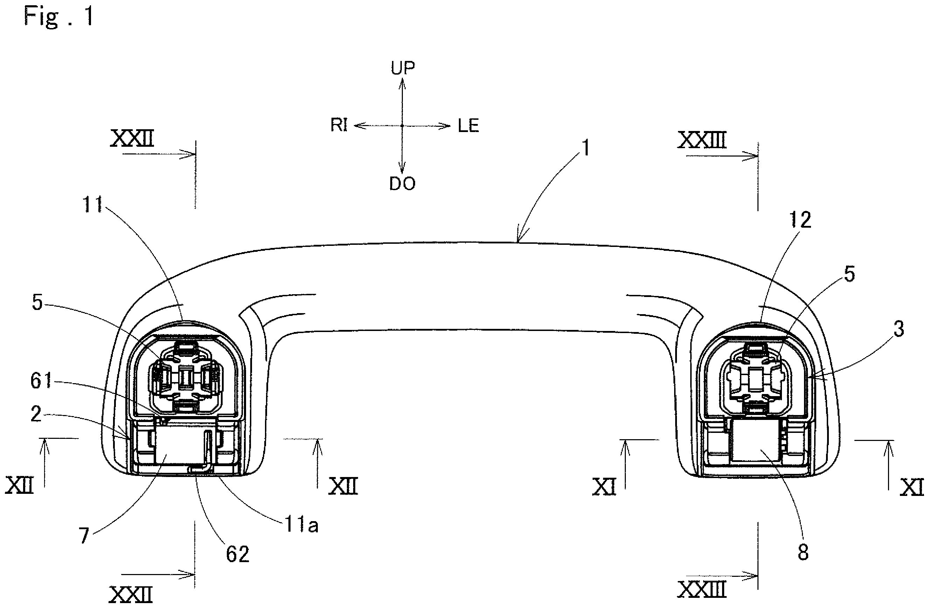

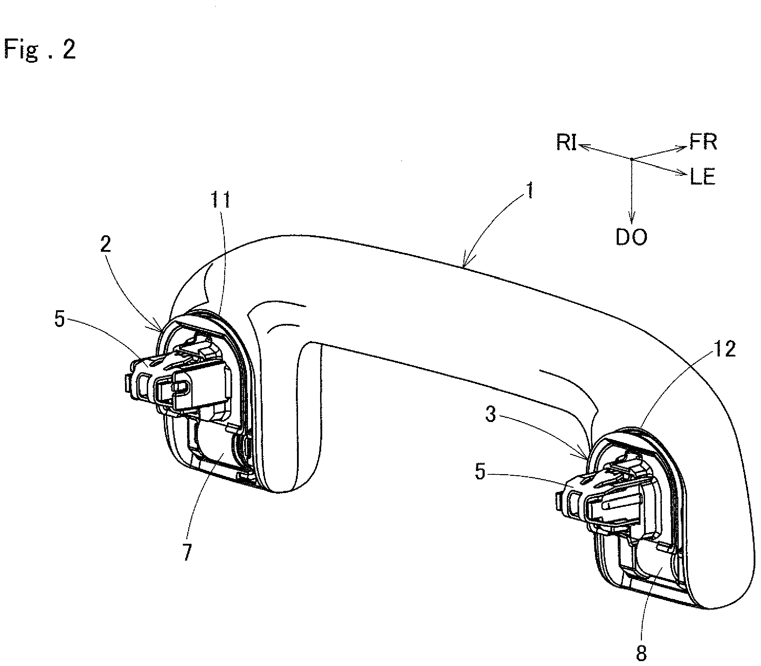

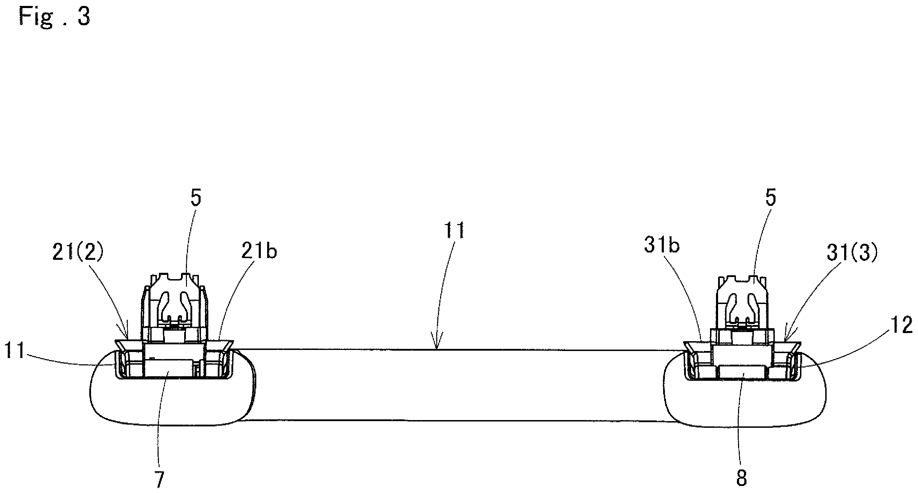

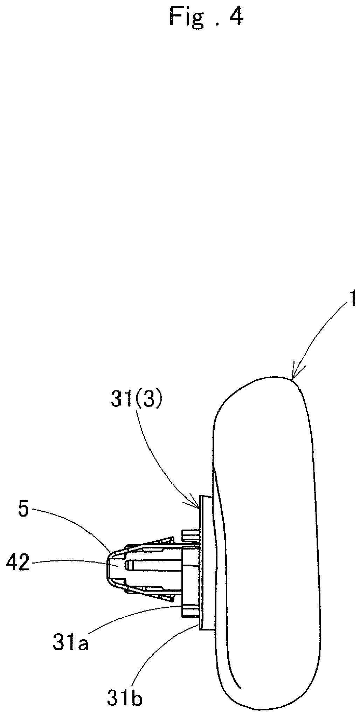

In an assist grip according to an embodiment, as shown in Fig. 1 to Fig. 5, a hinge assembly 2 and a mounting clip 5 inserted into the hinge assembly 2 are fitted and locked in a rectangular hole of a vehicle-body-side body panel, a hinge assembly 3 and a mounting clip 5 inserted into the hinge assembly 3 are fitted and locked in a rectangular hole of the vehicle-body-side body panel, and a grip body 1 is axially supported rotatably by the hinge assembly 2 and the hinge assembly 3. The right hinge assembly 2 includes a coil spring 6 that biases the grip body 1 into a state where the grip body 1 stores the hinge assembly 2, and the left hinge assembly 3 includes an oil damper 8 that applies a rotational load to the grip body 1.

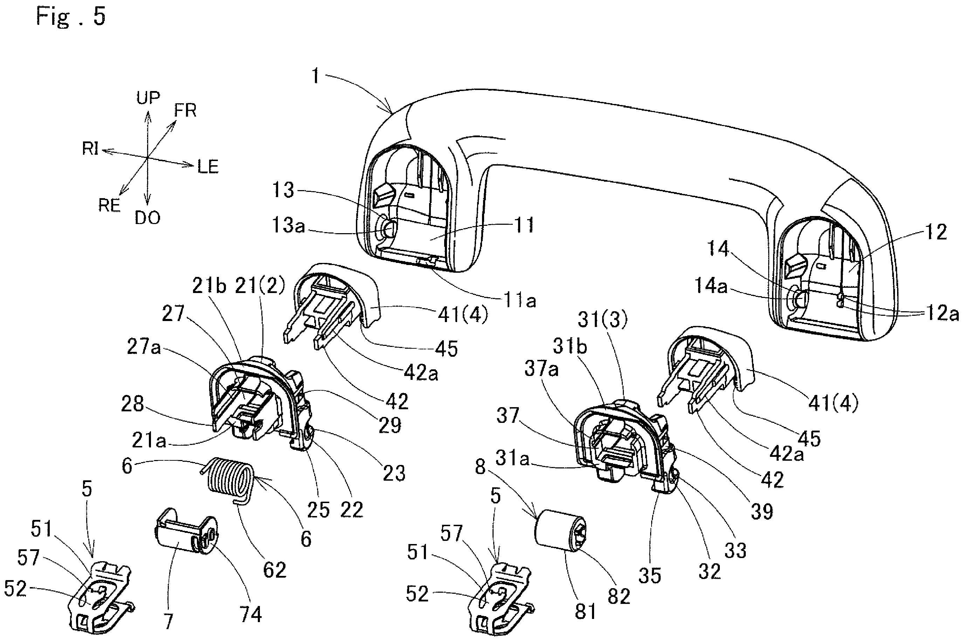

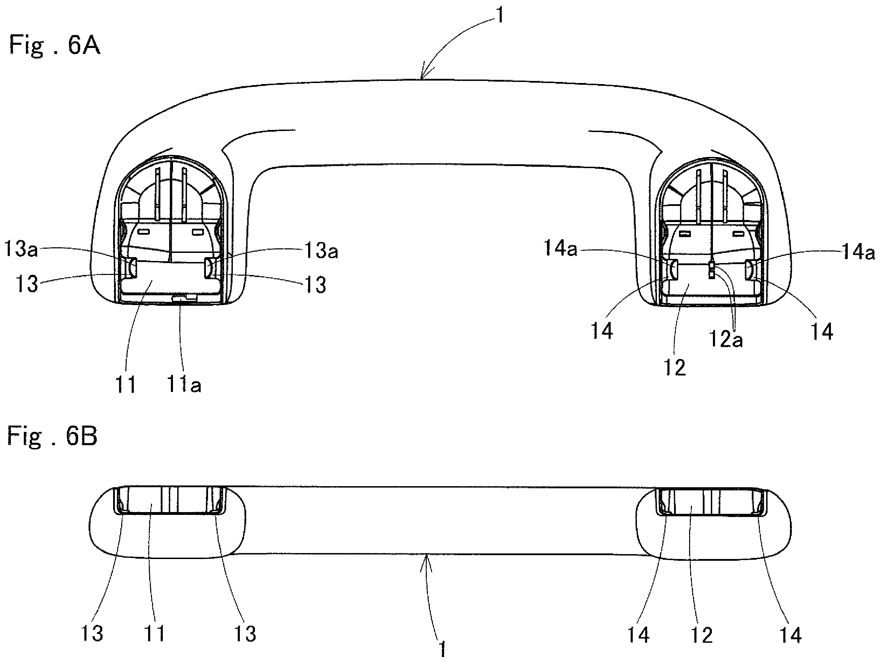

The grip body 1 is integrally molded into a grip shape from a synthetic resin, and as shown in Fig. 5 and Figs. 6, in back surfaces (rear sides) of base portions provided at both left and right ends of the grip body 1, a hinge cavity 11 (right) and a hinge cavity 12 (left) that assume substantially rectangular shapes are formed, a pair of shaft portions 13 and 13 are provided coaxially to project inward and face each other from both side walls (left and right walls) facing each other on an inner peripheral wall inside the hinge cavity 11, and the shaft portions 13 and 13 are directly molded on the integrally molded grip body 1. Similarly, a pair of shaft portions 14 and 14 are provided to project inward and face each other from both side walls facing each other on an inner peripheral wall inside the hinge cavity 12, and the shaft portions 14 and 14 are directly molded on the integrally molded grip body 1.

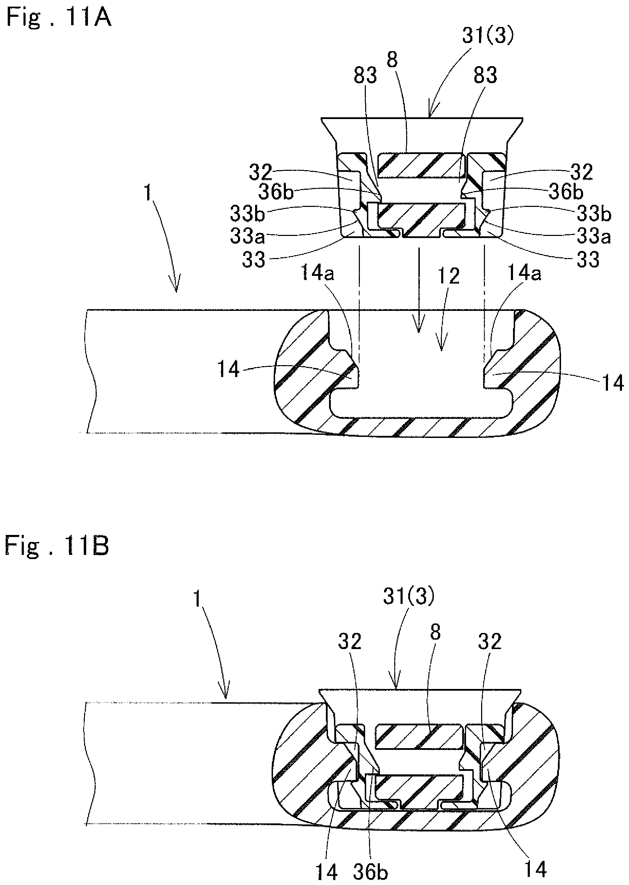

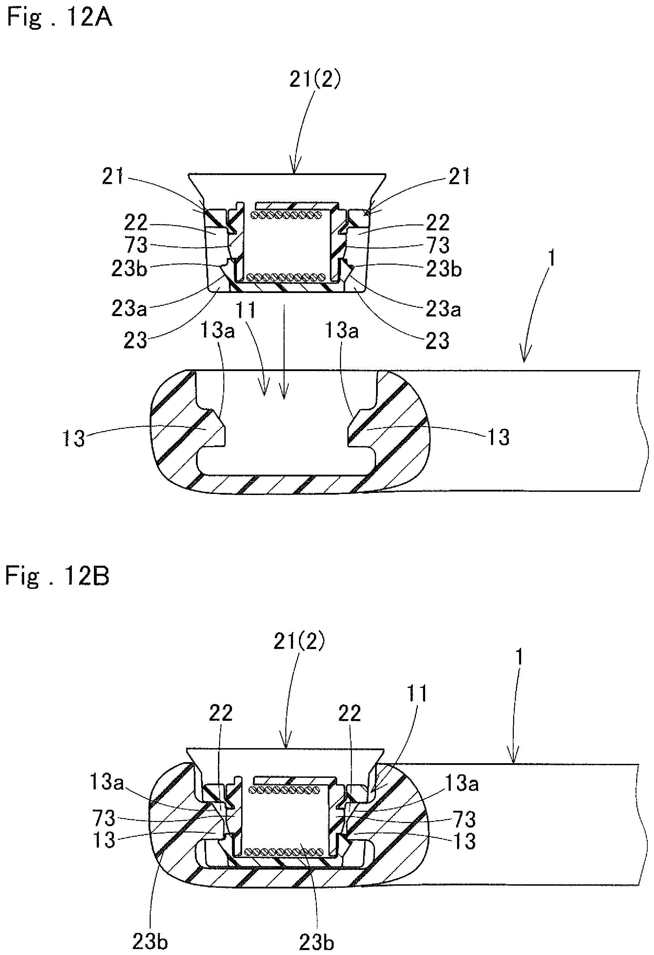

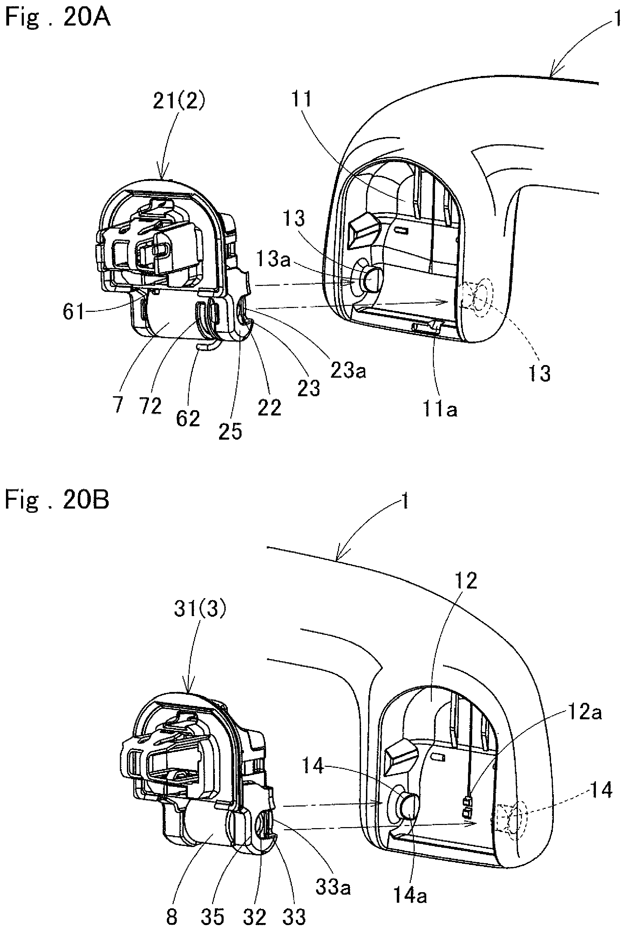

As shown in Figs. 6 and Figs. 12, on a tip end of the shaft portion 13, an inclined surface 13a is formed, and in a state where the grip body 1 is mounted to the hinge assembly 2, the inclined surface 13a faces an inclined surface 23a formed on a guide groove 23 to a shaft hole 22 of the hinge body 21 (Fig. 12A, Fig. 20A) described below. Accordingly, the shaft portion 13 can be easily fitted in a bearing portion 25, and last, the shaft portion 13 can be locked on a lock portion 23b, and the shaft portion 13 can be held in the shaft hole 22. When using the assist grip, the shaft portion 13 is securely held in the shaft hole 22, and accordingly, load resistant strength during use can be improved. Similarly, as shown in Figs. 6 and Figs. 11, on a tip end of the shaft portion 14, an inclined surface 14a is formed, and in a state where the grip body 1 is fitted to the hinge assembly 3, the inclined surface 14a faces an inclined surface 33a formed on a guide groove 33 to a shaft hole 32 of a hinge body 31 described below (Fig. 11A, Fig. 20B).

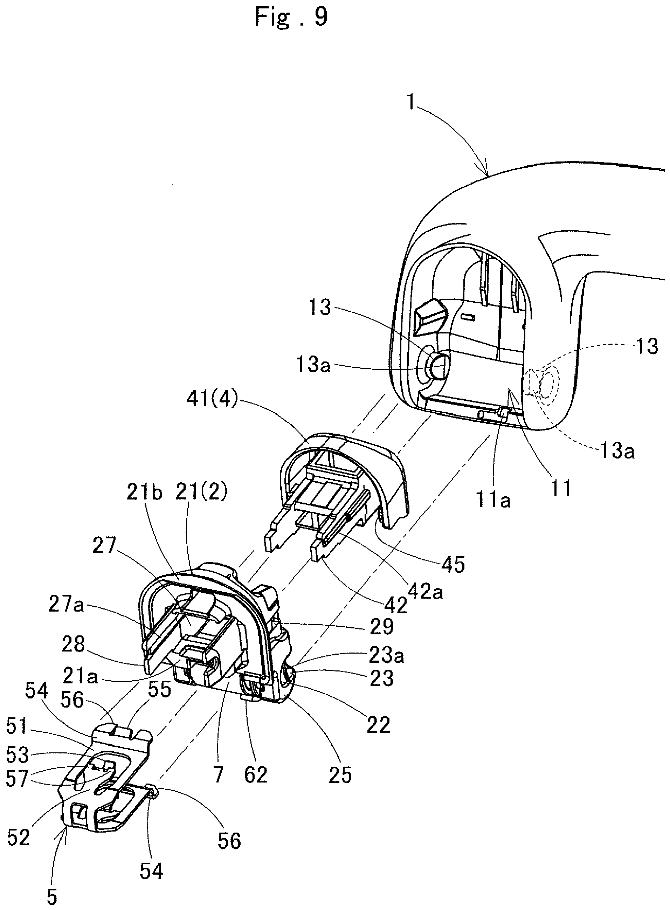

As shown in Fig. 5 and Fig. 9, the right hinge assembly 2 includes a hinge body 21, a mounting clip 5 formed of a metal plate which is fitted in the hinge body 21 and fitted and locked in a rectangular hole of a vehicle-body-side body panel, a cover 4 that includes clip support portions 42 disposed inside the mounting clip 5 to support the mounting clip from the front side, and covers and fits the hinge body 21, a coil spring 6 that biases the grip body 1 into a state where the grip body 1 stores the hinge assembly 2, and a spring case 7 in which the coil spring 6 is stored.

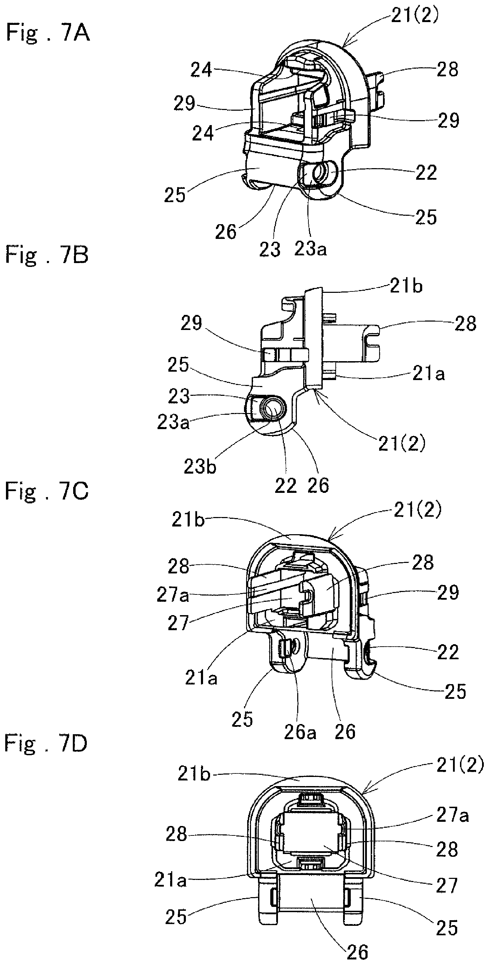

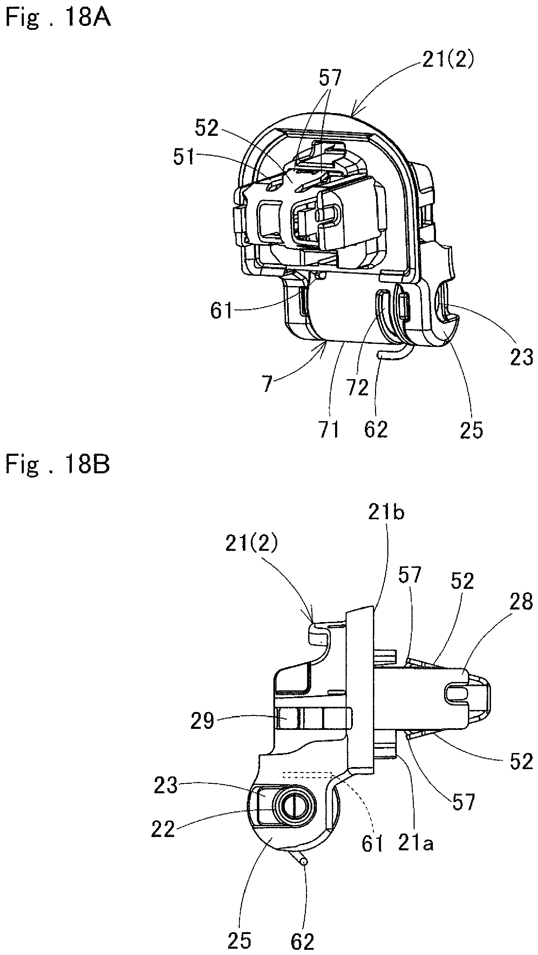

As shown in Figs. 7 and Figs. 18, the hinge body 21 of the right hinge assembly 2 is molded into a substantially cubic shape having a substantially square front face, and at lower sides of both left and right outer wall portions of the hinge body, shaft holes 22 and 22 of bearing portions 25 that are axially supported rotatably by the shaft portions 13 and 13 of the grip body 1 are provided. The structure is made so that, by axially supporting rotatably the shaft holes 22 and 22 by the shaft portions 13 and 13 formed on the inner peripheral wall of the hinge cavity 11, the hinge body 21 supports rotatably the grip body 1 inside the hinge cavity 11 of the grip body 1. On an axis between the left and right shaft holes 22 and 22, a spring case storing portion 26 that stores the spring case 7 storing the coil spring 6 is provided.

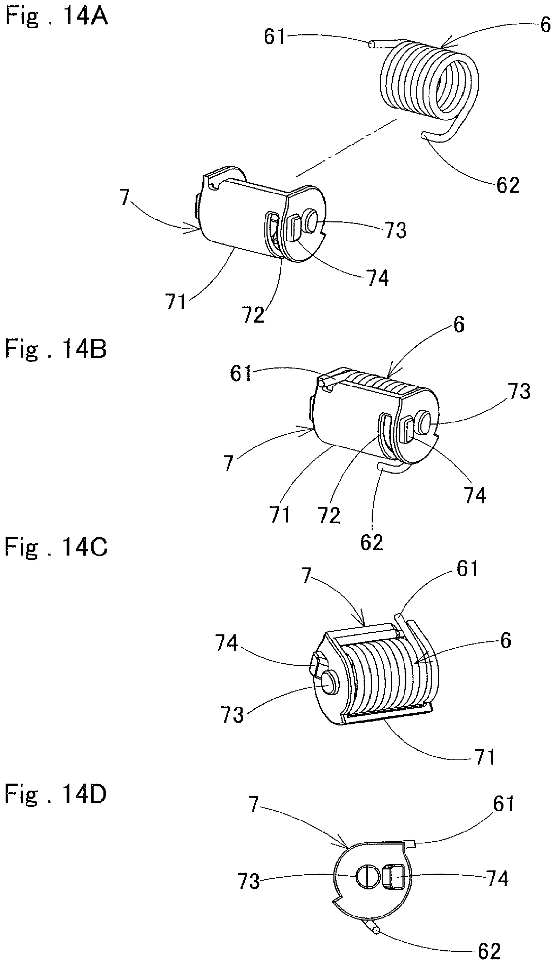

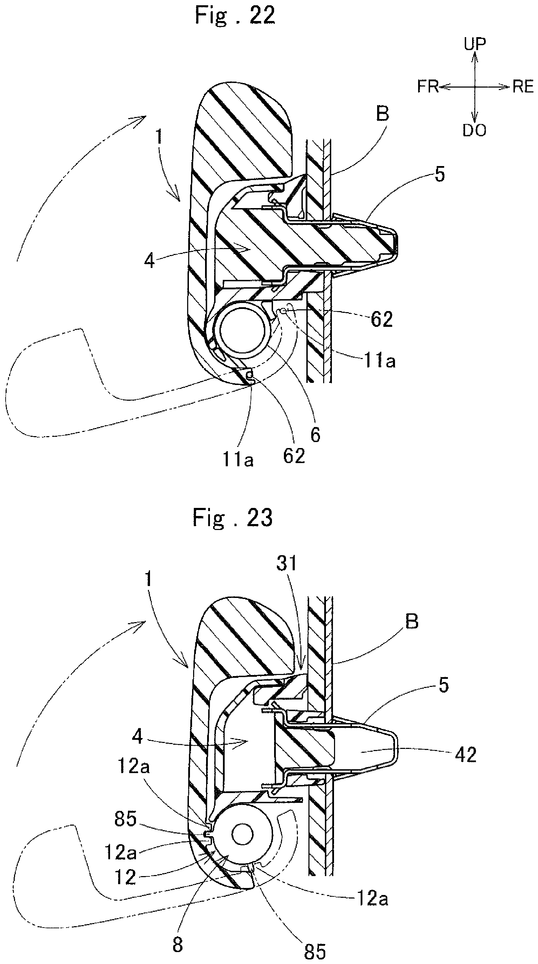

In the spring case storing portion 26, the coil spring 6 to bias the grip body 1 into a state where the grip body 1 stores the hinge assembly 2 (the solid lines in Fig. 22) is stored and fitted. The coil spring 6 is formed of, as shown in Fig. 14A, a torsion coil spring, and has one end portion 61 and an L-shaped end portion 62 bent into an L shape. The one end portion 61 is locked in the vicinity of the hinge body 21 inside the spring case storing portion 26 of the hinge body 21 when fitting (Figs. 18), and the L-shaped end portion 62 is locked in a lock recess 11a provided at the lower side of the hinge cavity 11 of the grip body 1 (Fig. 1, Fig. 5, Fig. 9). Accordingly, the coil spring 6 is disposed between the shaft portions 13 and 13 on the left and right walls of the hinge cavity 11 of the grip body 1 (between the left and right shaft holes 22 and 22 formed in the bearing portions 25 of the hinge body 21) so as to bias the grip body 1 into a state where the grip body 1 stores the hinge body 21 (Fig. 22).

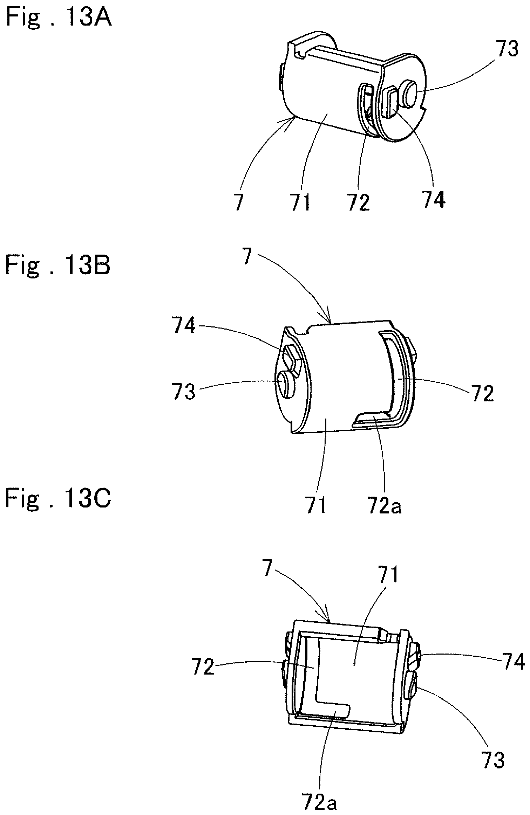

The spring case 7 is, as shown in Figs. 13, a housing having an arc-shaped bottom portion 71, and in the bottom portion 71, a slit 72 is provided in an arc direction, and substantially circular wall portions are provided on the left and right sides. The slit 72 is provided so that when the coil spring 6 is stored in the spring case 7, the L-shaped end portion 62 of the coil spring 6 projects from the inside to the outside of the spring case 7, and the L-shaped end portion 62 becomes slidable with respect to the spring case 7 in response to rotation of the grip body 1. On an end portion of the slit 72, an L-shaped end portion slit 72a is provided to allow the L-shaped end portion 62 bent into an L shape of the coil spring 6 to be easily inserted therethrough.

As shown in Figs. 13 and Figs. 14, on the outer sides of the left and right wall portions of the spring case 7, boss portions 73 are provided to project, and fitting projection portions 74 are provided to project, and when the spring case 7 is inserted into the spring case storing portion 26 of the hinge body 21, the fitting projection portions 74 fit in positioning recesses 26a formed inside the spring case storing portion 26, the boss portions 73 fit the insides of the shaft holes 22 provided in the hinge body 21, and the spring case 7 is locked in the spring case storing portion 26.

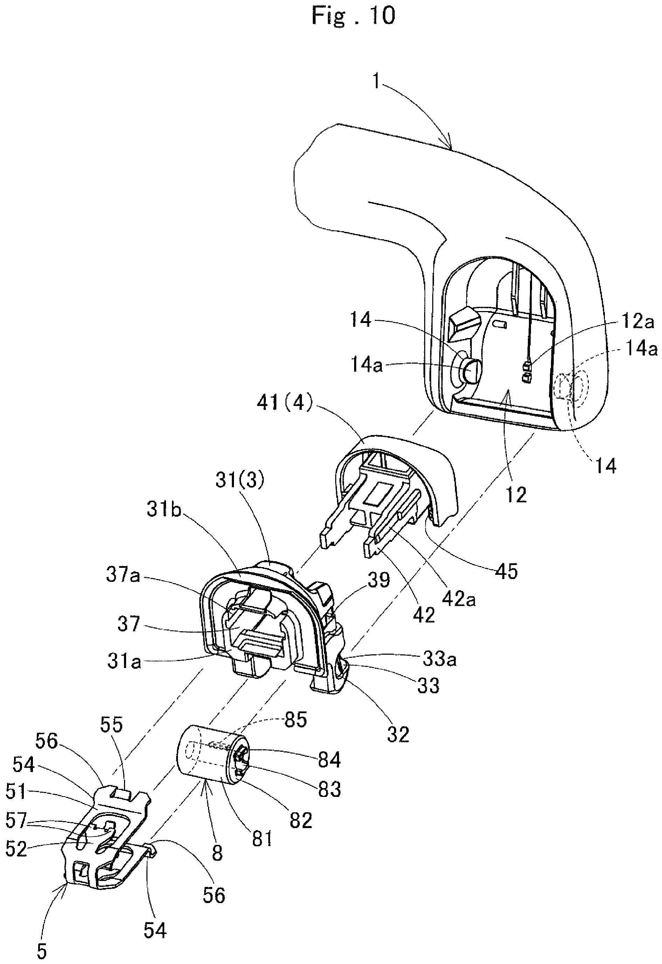

As shown in Fig. 5 and Fig. 10, the left hinge assembly 3 includes a hinge body 31, a mounting clip 5 formed of a metal plate which is fitted in the hinge body 31 and fitted and locked in a rectangular hole of the vehicle-body-side panel, a cover 4 that includes clip support portions 42 disposed inside the mounting clip 5 to support the mounting clip from the front side, and covers and fits the hinge body 31, and an oil damper 8 that applies a rotational load to the grip body 1.

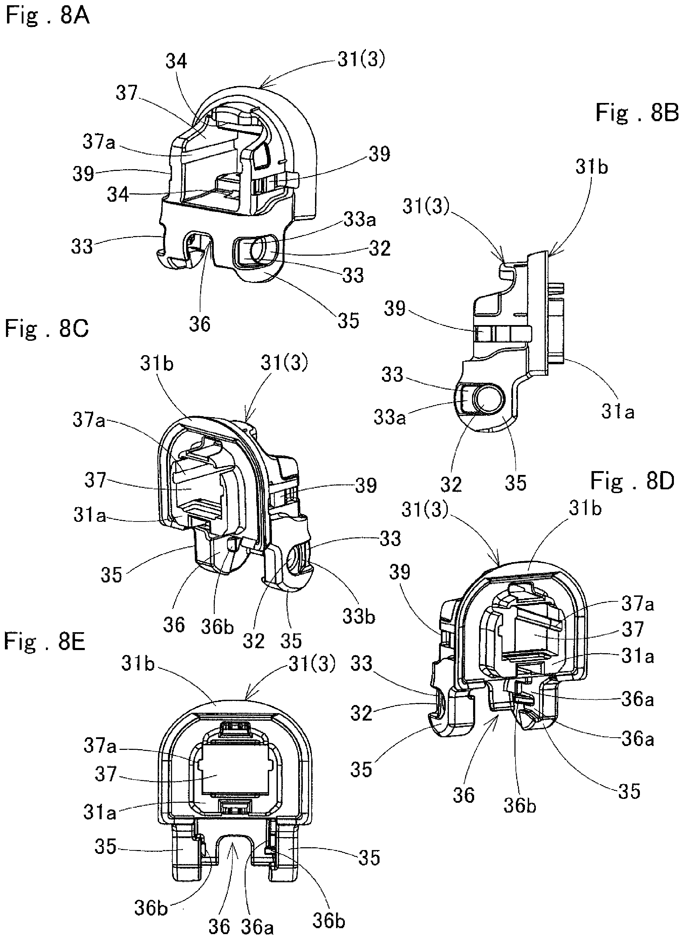

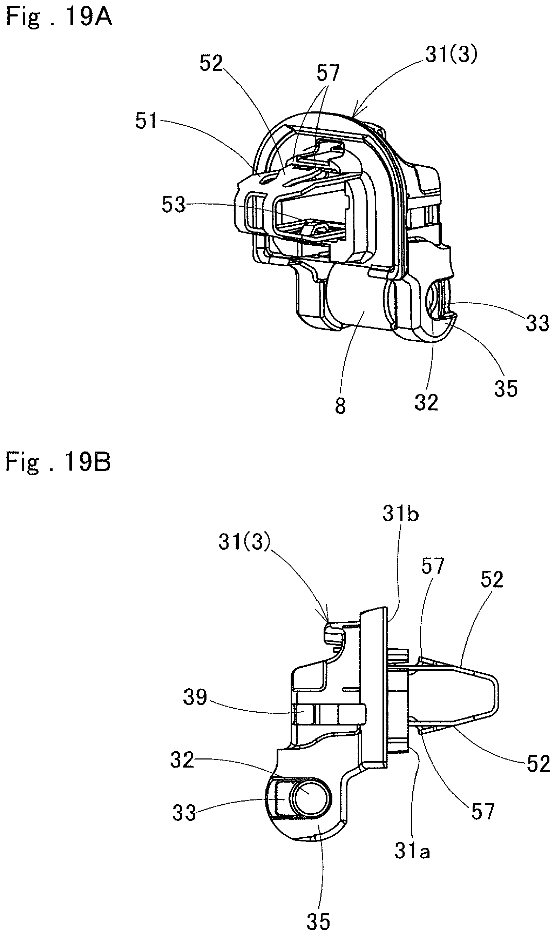

As shown in Figs. 8 and Figs. 19, the hinge body 31 of the left hinge assembly 3 is molded into a substantially cubic shape having a substantially square front face, and at lower sides of both left and right outer wall portions of the hinge body, shaft holes 32 and 32 of bearing portions 35 that are axially supported rotatably by the shaft portions 14 and 14 of the grip body 1 are provided. The structure is made so that by axially supporting rotatably the shaft holes 32 and 32 by the shaft portions 14 and 14 formed on an inner peripheral wall of the hinge cavity 12, the hinge body 31 supports the grip body 1 rotatably inside the hinge cavity 12 of the grip body 1. On an axis between the left and right shaft holes 32 and 32, an oil damper storing portion 36 that stores an oil damper 8 is provided, and on side walls of the oil damper storing portion 36, guide recesses 36a are provided and lock claws 36b are provided.

In the oil damper storing portion 36, the oil damper 8 that generates a braking force when the grip body 1 rotates is stored and fitted, and the oil damper 8 includes an inner cylinder 82 being a cylindrical body, and an outer cylinder 81 attached rotatably so as to include the inner cylinder 82, oil is filled in a gap formed between the inner cylinder 82 and the outer cylinder 81, and when the inner cylinder 82 and the outer cylinder 81 rotate relative to each other, a braking force is generated due to viscosity resistance of the oil.

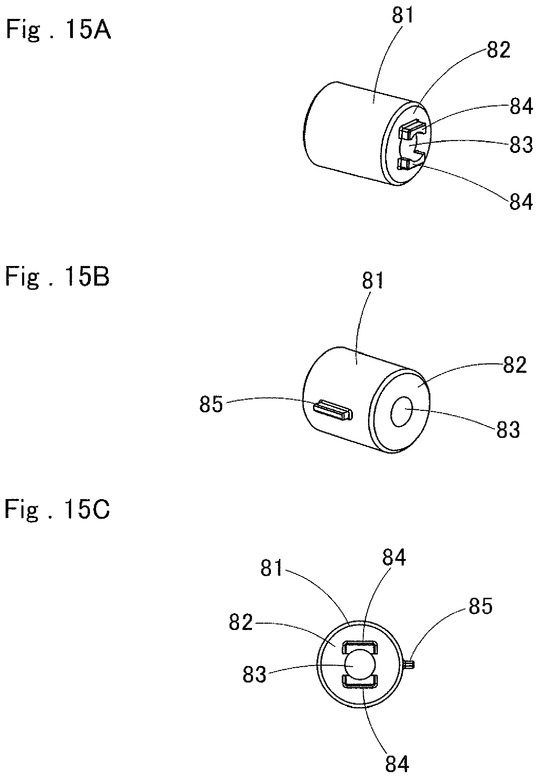

As shown in Figs. 15, in the oil damper 8, at axial support positions on both ends of the inner cylinder 82, recessed lock claw receivers 83 are provided, and at positions on both sides of the lock claw receiver 83, a pair of lock projection portions 84 are provided to project. Accordingly, when the oil damper 8 is inserted into the oil damper storing portion 36 of the hinge body 31, the lock projection portions 84 enter guide recesses 36a on both sides of the lock claws 36b provided on the side walls of the oil damper storing portion 36. The lock claw receivers 83 are locked on the lock claws 36b to prevent the oil damper 8 from unexpectedly coming off the oil damper storing portion 36. When the oil damper 8 is inserted, to enable the lock projection portions 84 provided to project from both sides of the lock claw receivers 83 to easily enter the guide recesses 36a, as shown in Fig. 8D, the opening sides (rear sides) of the guide recesses 36a are formed to be wide. Accordingly, the oil damper 8 can be accurately fitted in a correct posture to a proper position in the oil damper storing portion 36. In addition, since the pair of lock projection portions 84 are provided to project from positions on both sides of the lock claw receivers 83 of the oil damper 8, with respect to rotation of the assist grip, the oil damper 8 has less play, and any rattling and slowness sensation are reduced.

On the other hand, a protrusion portion 85 is provided to project from an outer peripheral portion of the outer cylinder 81, and when the oil damper 8 is inserted into the oil damper storing portion 36 of the hinge body 31 and the grip body 1 is fitted to the hinge body 31, as shown in Fig. 10, the protrusion portion 85 is locked in a protrusion lock portion 12a provided inside the hinge cavity 12, and as shown in Fig. 23, when the grip body 1 is operated to rotate, the outer cylinder 81 of the oil damper 8 rotates together with the grip body 1. The hinge assembly 3 is fixed to a body panel B of the vehicle body, and the lock projection portions 84 on the end portions of the inner cylinder 82 of the oil damper 8 are locked in the guide recesses 36a of the hinge assembly 3, so that when the grip body 1 is rotated with respect to the hinge assembly 3, the outer cylinder 81 of the oil damper 8 rotates with respect to the inner cylinder 82, and an appropriate rotational resistance is provided.

As shown in Figs. 7, on both sides of the hinge body 21, the bearing portions 25 are provided, and on the outer wall portion of the bearing portion 25, a guide groove 23 reaching the shaft hole 22 is formed, and on the guide groove 23, an inclined surface 23a and a lock portion 23b (Fig. 7B) are formed. As shown in Figs. 12, in a state where the hinge assembly 2 and the grip body 1 are fitted to each other, the inclined surface 13a on the tip end of the shaft portion 13 and the inclined surface 23a of the guide groove 23 face each other, so that the shaft portion 13 can be easily fitted in the bearing portion 25, the shaft portion 13 is locked in the lock portion 23b, and the shaft portion 13 is easily held in the shaft hole 22. Similarly, as shown in Figs. 8, on both sides of the hinge body 31, bearing portions 35 are provided, on the outer wall portion of the bearing portion 35, a shaft hole 32 and a guide groove 33 reaching the shaft hole 32 are formed, and on the guide groove 33, an inclined surface 33a and a lock portion 33b (Fig. 8C) are formed. As shown in Figs. 11, in a state where the hinge assembly 3 and the grip body 1 are fitted to each other, the inclined surface 14a on the tip end of the shaft portion 14 and the inclined surface 33a of the guide groove 33 face each other, so that the shaft portion 14 can be easily fitted in the bearing portion 35, and the shaft portion 14 is locked in the lock portion 33b, and the shaft portion 14 can be easily held in the shaft hole 32. When using the assist grip, the grip body 1 rotates, so that the shaft portion 13 is securely held in the shaft hole 22, the shaft portion 14 is securely held in the shaft hole 32, and load resistant strength during use can be improved.

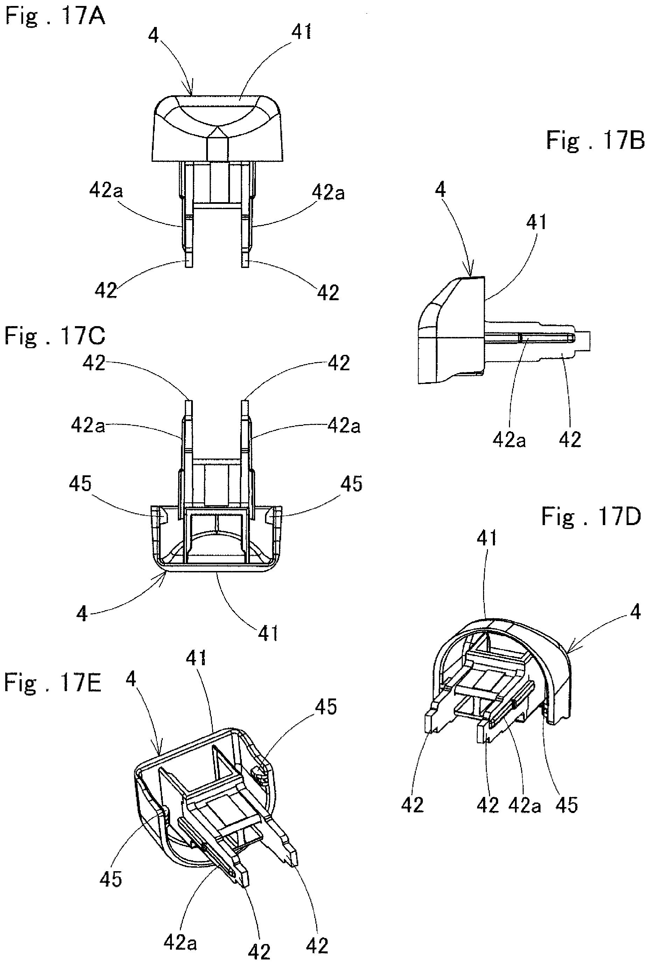

At the upper side in the hinge body 21, a rectangular opening 27 is provided in the front-rear direction. The rectangular opening 27 is formed into a shape that allows the mounting clip 5 to be inserted therein from the back side (rear side) as shown in Figs. 18, and allows the clip support portions 42 provided to project from the back surface side of the cover 4 to be inserted therein when fitting the cover 4 as shown in Fig. 9. As shown in Figs. 7, on left and right inner side surfaces of the rectangular opening 27, guide grooves 27a are formed in the front-rear direction, that is, in an insertion direction of the cover 4, and guide ribs 42a (Figs. 17) provided on one side surfaces of the clip support portions 42 of the cover 4 fit and slide in the guide grooves 27a. On both side portions of the hinge body 21, cover lock portions 29 (Figs. 7, Fig. 9) are formed, and when the cover 4 is fitted to the front face side of the hinge body 21, lock claws 45 (Fig. 9, Figs. 17) provided inside the cover 4 are locked thereon. Similarly, at the upper side in the hinge body 31, a rectangular opening 37 is provided in the front-rear direction. The rectangular opening 37 is formed into a shape that allows the mounting clip 5 to be inserted therein from the back side (rear side) as shown in Figs. 19, and allows the clip support portions 42 provided to project from the back surface side of the cover 4 to be inserted therein when fitting the cover 4 as shown in Fig. 10. As shown in Figs. 8, on left and right inner side surfaces of the rectangular opening 37, guide grooves 37a are formed in the front-rear direction, that is, in an insertion direction of the cover 4, and guide ribs 42a (Figs. 17) provided on one side surfaces of the clip support portions 42 of the cover 4 fit and slide in the guide grooves 37a. On both side portions of the hinge body 31, cover lock portions 39 (Figs. 8, Fig. 10) are formed, and when the cover 4 is fitted to the front face side of the hinge body 31, lock claws 45 (Fig. 10, Figs. 17) provided inside the cover 4 are locked thereon.

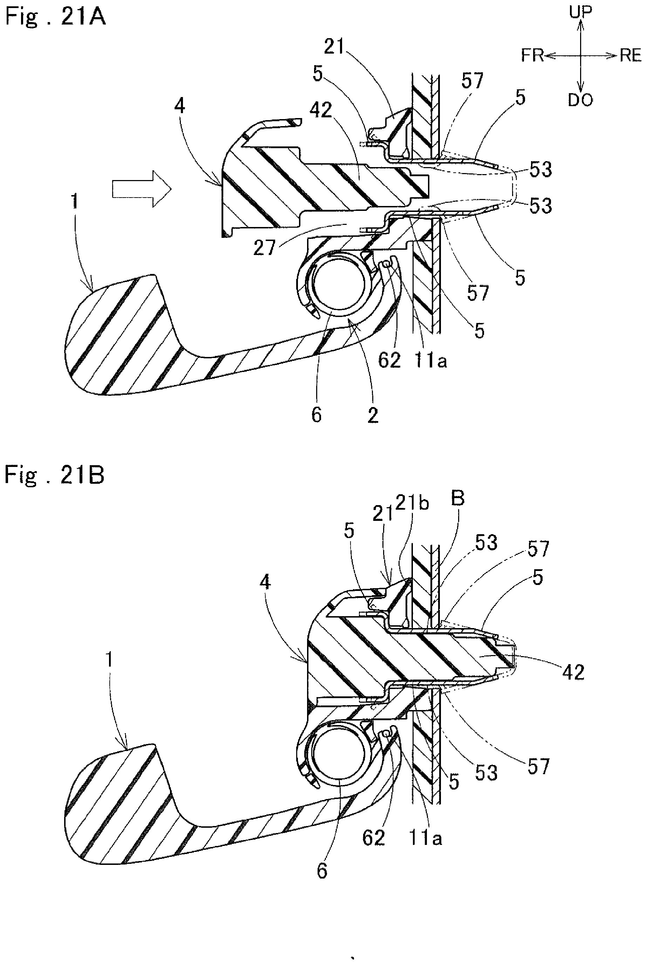

As shown in Figs. 7, on a back surface side (rear side) of the rectangular opening 27, a rectangular frame portion 21a is provided to project, a seat portion 21b is formed on a lowered portion on the periphery of the rectangular frame portion 21a, and when the hinge body 21 is fitted in a rectangular hole of the body panel B, the rectangular frame portion 21a is fitted in the rectangular hole, and the seat portion 21b is pressed against the surface of the body panel B (Figs. 21). Similarly, as shown in Figs. 8, on the back surface side of the rectangular opening 37, a rectangular frame portion 31a is provided to project, a seat portion 31b is formed on a lowered portion on the periphery of the rectangular frame portion 31a, and when the hinge body 31 is fitted in a rectangular hole of the body panel B, the rectangular frame portion 31a is fitted in the rectangular hole, and the seat portion 31b is formed to press against the surface of the body panel B (Fig. 23).

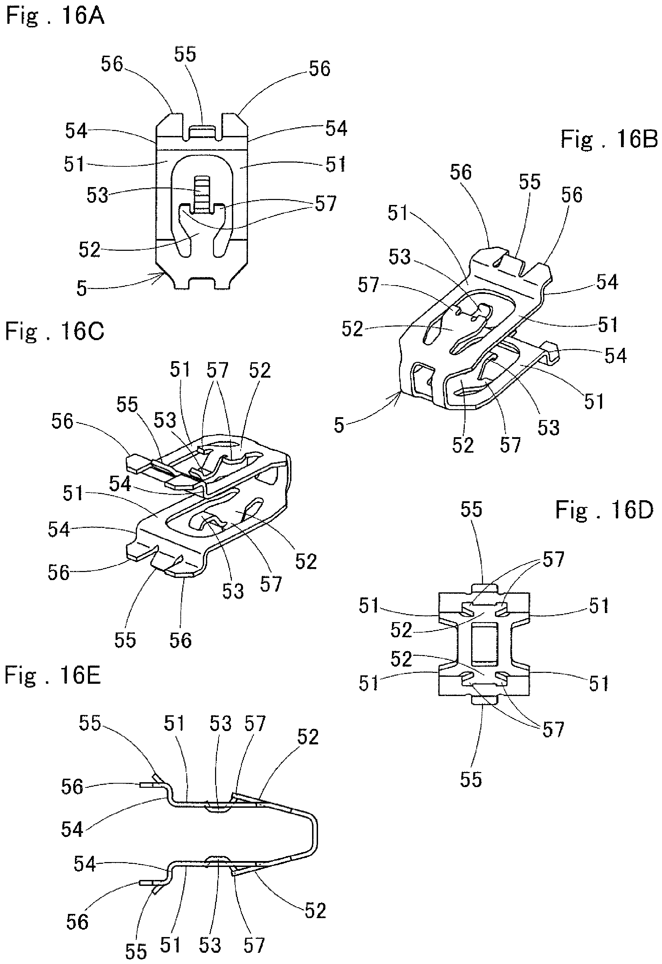

Into the rectangular opening 27 of the hinge body 21 and the rectangular opening 37 of the hinge body 31, the mounting clips 5 are respectively inserted and fitted from the back surface side (rear side). As shown in Figs. 16, this mounting clip 5 is formed by bending a metal plate with spring resilience into a substantially U shape, and on both sides thereof, resilient leg portions 51 are formed to have spring resilience. On the resilient leg portions 51 on both sides, resilient swelling-out portions 52 are formed by cutting and raising inner portions of the resilient leg portions 51 so as to open outward.

The resilient swelling-out portions 52 on both sides of the mounting clip 5 are formed to be resiliently deformable so as to open outward from the resilient leg portions 51 as described above, and on a tip end of the resilient swelling-out portion 52, a first lock portion 53 bent into a substantially L shape and flat plate-shaped second lock portions 57 are formed. Accordingly, when the mounting clip 5 is inserted into the rectangular hole of the body panel B being a fixed portion, the first lock portions 53 are locked on an edge portion of the rectangular hole, and the tip ends of the second lock portions 57 are locked on the back surface of the body panel B (Fig. 21A). That is, at the center of the tip end portion of the resilient swelling-out portion 52, the first lock portion 53 is formed by being bent into an L shape, and from both sides of the first lock portion 53, the second lock portions 57 are provided to project while being inclined diagonally in plate shapes parallel to the planar surface of the resilient swelling-out portion 52.

Further, near tip ends of the resilient leg portions 51 on both sides, stepped portions 54 are formed by being bent at substantially right angles with respect to the leg portions, and on tip end sides of the stepped portions 54, projection portions 56 are extended substantially parallel to an insertion direction of the mounting clip 5, that is, substantially parallel to the resilient leg portions 51 to form tip end portions. At a central portion of the projection portions 56, a lock claw 55 is formed by cutting and raising the central portion so as to open outward.

When the mounting clip 5 is fitted to the hinge body 21, from the back surface side (rear surface side), an end portion on the projection portion 56 side on the front face side of the mounting clip 5 is resiliently deformed inward and inserted into the rectangular opening 27 of the hinge body 21. At this time, the stepped portions 54 on both sides of the mounting clip 5 are locked on inner edge portions on both sides of the rectangular opening 27, and the lock claws 55 on both sides enter hole portions 24 (Fig. 7A) on both sides inside the rectangular opening 27 of the hinge body 21 and are formed to be locked on locked portions on the front face sides of the hole portions 24. Similarly, when the mounting clip 5 is fitted to the hinge body 31, an end portion on the projection portion 56 side on the front face side of the mounting clip 5 is resiliently deformed inward and inserted into the rectangular opening 37 of the hinge body 31 from the back surface side. At this time, the stepped portions 54 on both sides of the mounting clip 5 are locked on the inner edge portions on both sides of the rectangular opening 37, and the lock claws 55 on both sides enter hole portions 34 (Fig. 8A) on both sides inside the rectangular opening 37 of the hinge body 31, and are formed to be locked on the locked portions on the front face sides of the hole portions 34.

To the face side (front face side) of the hinge body 21, the cover 4 is fitted so as to cover the front face of the hinge body 21. As shown in Figs. 17, the cover 4 is configured to include a cover body 41 that covers the front face of the hinge body 21, and a pair of clip support portions 42 provided to project from the back surface side of the cover body 41. On outer side surfaces of the clip support portions 42, guide ribs 42a are provided, and guide grooves 27a that can fit the guide ribs 42a are provided on the inner side surfaces of the rectangular opening 27 of the hinge body 21 as shown in Figs. 7. Accordingly, as shown in Fig. 5 and Fig. 9, when the cover 4 is pushed into the hinge assembly 2 so that the clip support portions 42 of the cover 4 are inserted into the rectangular opening 27 of the hinge assembly 2, 3, the guide ribs 42a fit and slide on the guide grooves 27a on the hinge body 21 side, and the cover 4 can always be properly fitted without tilting. Similarly, to the face side of the hinge body 31, the cover 4 is fitted so as to cover the front face of the hinge body 31. On outer side surfaces of the clip support portions 42, guide ribs 42a are provided, and guide grooves 37a that can fit the guide ribs 42a are provided on the inner side surfaces of the rectangular opening 37 of the hinge body 31 as shown in Figs. 8. Accordingly, as shown in Fig. 5 and Fig. 10, when the cover 4 is pushed into the hinge assembly 3 in a state that the clip support portions 42 of the cover 4 are inserted into the rectangular opening 37 of the hinge assembly 3, the guide ribs 42a fit and slide on the guide grooves 37a on the hinge body 31 side, and the cover 4 can always be properly fitted without tilting.

On both side portions inside the cover body 41, lock claws 45 that are locked on cover lock portions 29 or cover lock portions 39 provided on both side portions of the hinge body 21 or the hinge body 31 are provided. By the lock claws 45, the cover 4 is temporarily fitted to the hinge body 21 or the hinge body 31, and is securely fixed by being pushed into the hinge body 21 or the hinge body 31 in a final stage.

The assist grip configured as described above is assembled as follows. First, the mounting clips 5 are assembled to the hinge body 21 and the hinge body 31 on both sides. The mounting clip 5 is inserted into the rectangular opening 27 of the hinge body 21 from the back surface side (rear surface side) by resiliently deforming an end portion on the projection portion 56 side on the front face side of the mounting clip 5 inward. At this time, the stepped portions 54 on both sides of the mounting clip 5 are locked on inner edge portions on both sides of the rectangular opening 27, and the lock claws 55 on both sides enter the hole portions 24 (Fig. 7A) on both sides inside the rectangular opening 27 of the hinge body 21 and are locked on the locked portions on the front face sides of the hole portions 24 (Figs. 18). Similarly, the mounting clip 5 is inserted into the rectangular opening 37 of the hinge body 31 from the back surface side by resiliently deforming an end portion on the projection portion 56 side on the front face side of the mounting clip 5 inward. At this time, the stepped portions 54 on both sides of the mounting clip 5 are locked on inner edge portions on both sides of the rectangular opening 37, and the lock claws 55 on both sides enter the hole portions 34 (Fig. 8A) on both sides inside the rectangular opening 37 of the hinge body 31, and are locked on the locked portions on the front face sides of the hole portions 34 (Figs. 19). The mounting clip 5 may be fitted to the back surface side of the hinge body 21 or the hinge body 31 in a state where the hinge body 21 or the hinge body 31 is fitted to the inside of the hinge cavity 11 or the hinge cavity 12 of the grip body 1.

Next, as shown in Figs. 14, the coil spring 6 is stored in the spring case 7. At this time, the L-shaped end portion slit 72a is formed in the slit 72 provided in an arc direction of the bottom portion 71 of the housing body of the spring case 7, so that in a state where one end portion 61 of the coil spring 6 is locked on one end of the spring case 7, the L-shaped end portion 62 bent into an L shape is inserted from the end portion slit 72a, and the coil spring 6 can be easily incorporated into the spring case 7.

The spring case 7 storing the coil spring 6 is stored in the spring case storing portion 26 of the right hinge assembly 2 as shown in Fig. 5 and Fig. 9. At this time, on the outer sides of the left and right wall portions of the spring case 7, fitting projection portions 74 (Figs. 14) are provided to project, and on left and right inner wall portions of the spring case storing portion 26, positioning recesses 26a (Fig. 7C) are formed, so that by fitting the fitting projection portions 74 in the positioning recesses 26a, the spring case 7 can be easily incorporated at a proper position in the spring case storing portion 26.

The oil damper 8 is stored in the oil damper storing portion 36 of the left hinge assembly 3 as shown in Fig. 10. At tip end axial support positions of the oil damper 8, lock projection portions 84 and lock claw receivers 83 are formed, and on side walls of the oil damper storing portion 36, guide recesses 36a and lock claws 36b are formed (Figs. 8). Accordingly, when the oil damper 8 is stored in the oil damper storing portion 36, the lock projection portions 84 enter through the guide recesses 36a, and the oil damper 8 can be easily mounted at a proper position in the oil damper storing portion 36. In addition, the lock claws 36b are locked in the lock claw receivers 83, and the oil damper 8 can be easily mounted at a proper position in the oil damper storing portion 36.

Next, as shown in Fig. 9 to Figs. 12, the hinge assembly 2 is mounted in the hinge cavity 11 of the grip body 1, and the hinge assembly 3 is mounted in the hinge cavity 12.

On an inner peripheral wall of the hinge cavity 11 of the grip body 1, a pair of shaft portions 13 and 13 are provided coaxially to project inward, and on tip ends of the shaft portions 13 and 13, inclined surfaces 13a and 13a are formed. On outer wall portions of the bearing portions 25 and 25 on both sides of the hinge body 21 of the hinge assembly 2, shaft holes 22 and 22 are formed, and on these wall portions, guide grooves 23 and 23 reaching the shaft holes 22 and 22 are formed, and on the guide grooves 23 and 23, inclined surfaces 23a and 23a and lock portions 23b and 23b are formed. Similarly, on an inner peripheral wall of the hinge cavity 12, a pair of shaft portions 14 and 14 are provided coaxially to project inward, and on tip ends of the shaft portions 14 and 14, inclined surfaces 14a and 14a are formed. In outer wall portions of the bearing portions 35 and 35 on both sides of the hinge body 31 of the hinge assembly 3, shaft holes 32 and 32 are formed, and on these wall portions, guide grooves 33 and 33 reaching the shaft holes 32 and 32 are formed, and on the guide grooves 33 and 33, inclined surfaces 33a and 33a and lock portions 33b and 33b are formed.

When the hinge assembly 2 is mounted to the grip body 1, the inclined surfaces 13a and 13a of the shaft portions 13 and 13 and the inclined surfaces 23a and 23a of the guide grooves 23 and 23 face each other, so that when the hinge assembly 2 is inserted into the hinge cavity 11 of the grip body 1, as shown in Fig. 12A and Fig. 20A, the shaft portions 13 and 13 of the grip body 1 enter the guide grooves 23 and 23 while being guided, and the lock portions 23b get over the inclined surfaces 13a of the shaft portions 13 and fit and are locked in the shaft holes 22 and 22. At this time, the L-shaped end portion 62 of the coil spring 6 is locked in the lock recess 11a near the hinge cavity 11 (Fig. 1). The cover 4 is temporarily fitted by inserting the clip support portions 42 into the rectangular opening 27 of the hinge body 21.

Similarly, when the hinge assembly 3 is mounted to the grip body 1, the inclined surfaces 14a and 14a of the shaft portions 14 and 14 and the inclined surfaces 33a and 33a of the guide grooves 33 and 33 face each other. When the hinge assembly 3 is inserted into the hinge cavity 12, as shown in Fig. 11A and Fig. 20B, the shaft portions 14 and 14 of the grip body 1 enter the guide grooves 33 and 33 while being guided, and the lock portions 33b get over the inclined surfaces 14a of the shaft portions 14 and fit and are locked in the state shown in Fig. 11B. At this time, the protrusion 85 of the oil damper 8 is locked in the protrusion lock portion 12a (Fig. 23). The cover 4 is temporarily fitted by inserting the clip support portions 42 into the rectangular opening 37 of the hinge body 31.

As described above, when the hinge assembly 2 is fitted in the grip body 1, as shown in Figs. 12, the inclined surfaces 13a and 13a of the shaft portions 13 and 13 and the inclined surfaces 23a and 23a of the guide grooves 23 and 23 face each other. Therefore, the shaft portions 13 and 13 can be easily fitted in the bearing portions 25 and 25, and last, the shaft portions 13 and 13 are locked on the lock portions 23b and 23b, so that the shaft portions 13 and 13 can be easily held in the shaft holes 22 and 22. Similarly, when the hinge assembly 3 is fitted in the grip body 1, as shown in Figs. 11, the inclined surfaces 14a and 14a of the shaft portions 14 and 14 and the inclined surfaces 33a and 33a of the guide grooves 33 and 33 face each other. Therefore, the shaft portions 14 and 14 can be easily fitted in the bearing portions 35 and 35, and last, the shaft portions 14 and 14 are locked on the lock portions 33b and 33b, so that the shaft portions 14 and 14 can be easily held in the shaft holes 32 and 32.

In a case where the assist grip is fixed to the body panel B (bracket portion of the body panel) on an inner side of a trim material provided on a ceiling or a side wall surface inside a vehicle compartment, by holding the grip body 1 of the assist grip, tip ends of the clip support portions 42 and the mounting clip 5 of the hinge assembly 2 and tip ends of the clip support portions 42 and the mounting clip 5 of the hinge assembly 3 on base portions on both sides of the grip body 1 are respectively pushed into rectangular holes provided in the body panel B.

At this time, the mounting clip 5 enters the inside of the rectangular hole while resiliently deforming the resilient swelling-out portion 52 of the mounting clip 5 inward. Then, when the resilient swelling-out portion 52 of the mounting clip 5 completely fits in the rectangular hole, the first lock portion 53 and the second lock portions 57 of the resilient swelling-out portion 52 resiliently restore so as to open outward, and the first lock portion 53 is locked on an edge portion of the rectangular hole of the body panel B, and tip ends of the second lock portions 57 are locked on the back surface (inner surface) of the body panel B (Fig. 21A). Accordingly, the hinge body 21 is brought into a state where the edge portion of the rectangular hole of the body panel B is sandwiched between the seat portion 21b of the hinge body 21 and the second lock portions 57, and by locking tip ends of the second lock portions 57 of the resilient swelling-out portion 52 on the back surface of the body panel B, the hinge body 21 is fixed and assembled to the body panel B with high coming-off resistance (Fig. 21B). Similarly, the hinge body 31 is brought into a state where the edge portion of the rectangular hole of the body panel B is sandwiched between the seat portion 31b of the hinge body 31 and the second lock portions 57, and tip ends of the second lock portions 57 of the resilient swelling-out portion 52 are locked on the back surface of the body panel B, and the hinge body 31 is fixed and assembled to the body panel B with high coming-off resistance.

Thereafter, the cover 4 temporarily fitted to the hinge body 21 is pushed into the rectangular opening 27 as shown in Figs. 21. At this time, the lock claws 45 inside the cover 4 are completely fitted and locked in the cover lock portions 29 on both sides of the hinge body 21. At this time, the guide ribs 42a provided on side portions of the cover body 41 of the cover 4 fit and come into sliding contact with the guide grooves 27a on the inner side surfaces of the rectangular opening 27 of the hinge body 21 and the cover 4 is pushed into the hinge body 21, so that the cover 4 enters the inside of the hinge body 21 straightly without tilting, and last, the lock claws 45 of the cover 4 are locked on the cover lock portions 29 of the hinge body 21, and accordingly, the cover 4 is fitted to a proper position. Similarly, the cover 4 temporarily fitted to the hinge body 31 is pushed into the rectangular opening 37. The lock claws 45 inside the cover 4 are completely fitted and locked in the cover lock portions 39 on both sides of the hinge body 31. The guide ribs 42a provided on side portions of the cover body 41 of the cover 4 fit and come into sliding contact with the guide grooves 37a on the inner side surfaces of the rectangular opening 37 of the hinge body 31 and the cover 4 is pushed into the hinge body 31, and the cover 4 enters the inside of the hinge body 31 straightly without tilting, and the lock claws 45 of the cover 4 are locked on the cover lock portions 39 of the hinge body 31, and accordingly, the cover 4 is fitted to a proper position. At this time, as shown in Figs. 21, the clip support portions 42 of the cover 4 completely fit the inside of the mounting clip 5, and the first lock portion 53 and the second lock portions 57 of the resilient swelling-out portion 52 of the mounting clip 5 are securely locked on the body panel B being a fixed portion, and accordingly, mounting of the assist grip is completed.

When using the assist grip, a user rotates the grip body 1 downward (from the solid-line position to the chain-line position in Fig. 22) with respect to the hinge assembly 2 and the hinge assembly 3. At this time, the L-shaped end portion 62 of the coil spring 6 is twisted against a spring force of the coil spring 6 due to rotation of the lock recess 11a in the grip body 1. Accordingly, the grip body 1 rotates downward against the spring force, and by grasping the grip body 1 by the user, the use state of the grip body 1 is held.

A load to be applied to the grip body 1 when using the assist grip is applied mainly from the vicinities of root portions of the shaft portions 13 provided to project from the inner peripheral wall of the hinge cavity 11 to the peripheral wall portions of the shaft holes 22 at the bearing portions 25 on both sides of the hinge assembly 2. Similarly, a load to be applied to the grip body 1 is applied mainly from the vicinities of root portions of the shaft portions 14 provided to project from the inner peripheral wall of the hinge cavity 12 to the peripheral wall portions of the shaft holes 32 at the bearing portions 35 on both sides of the hinge assembly 3. Therefore, bending moments to be applied to the cantilevered shaft portions 13 and shaft portions 14 that have free tip ends are comparatively small, and deformations of the shaft portions 13 and the shaft portions 14, the bearing portions 25 and the bearing portions 35, are reduced as compared with conventional deformations, so that durability of the pivot support portions of the grip body 1 can be improved.

On the other hand, when a user takes his/her hand off of the grip body 1 in the use state of the assist grip, the grip body 1 is subjected to a downward (the clockwise direction in Fig. 22) biasing force from the L-shaped end portion 62 of the coil spring 6 and rotates in the same direction to restore to a non-use state (the solid position in Fig. 22), and at this time, due to operation of the oil damper 8, rotation of the grip body 1 is braked, and the biasing force applied to the grip body 1 is weakened and the grip body returns to the position of the non-use state.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. An assist grip comprising:
a grip body (1) that has hinge cavities (11, 12) provided in base portions at both left and right ends and is integrally molded;
hinge assemblies (2, 3) including hinge bodies (21, 31) that are rotatably mounted in the hinge cavities (11, 12) on both ends via pivot shafts;
mounting clips (5) that are formed by bending metal plates with spring resilience into substantially U shapes and provided with resilient leg portions (51) on both sides, and have resilient swelling-out portions (52) swelling outward provided on the resilient leg portions (51), and are respectively inserted into rectangular openings provided at substantially centers of the hinge bodies (21, 31); and
covers (4) each having a pair of plate-shaped clip support portions (42) provided to project parallel and inserted into the insides of the resilient leg portions (51) on both sides of the mounting clip (5), and fitted to the hinge bodies (21, 31) so as to cover front faces of the hinge assemblies (2, 3), where
the assist grip is mounted by inserting the mounting clips (5) and the clip support portions (42) of the covers (4) into rectangular holes provided in a body panel and fixing the hinge assemblies (2, 3) to the body panel, wherein
a pair of shaft portions (13, 14) are provided coaxially to project inward from both side walls facing each other on an inner peripheral wall of the hinge cavity (11),
bearing portions (25, 35) are provided on both sides of the hinge body (21, 31), and shaft holes (22, 32) are formed in outer wall portions of the bearing portions (25, 35) on both sides, and
the shaft portions (13, 14) are rotatably fitted and axially supported in the shaft holes (22, 32).

2. The assist grip according to Claim 1, wherein inclined surfaces (13a, 14a) are formed on tip ends of the shaft portions (13, 14), guide grooves reaching the shaft holes (23, 32) are formed on outer wall portions of the bearing portions (25) on both sides of the hinge body, inclined surfaces (23a, 33a) and lock portions (23b) are formed on the guide grooves (23, 33), and in a state where the grip body (1) and the hinge assembly (2,3) are mounted, the inclined surfaces (13a, 14a) on the tip ends of the shaft portions (13, 14) and the inclined surfaces (23a, 33a) of the guide grooves (23, 33) face each other.

3. The assist grip according to Claim 1 or 2, wherein
inside the bearing portions (25) of one of the hinge bodies (21), a coil spring (6) stored in a spring case (7) is disposed,
the spring case (7) is stored in a spring case storing portion (26) provided on an axis between the left and right shaft holes (22) formed in the bearing portions (25) of the one hinge body (21),
an L-shaped end portion (62) bent into an L shape is provided at an end portion of the coil spring (6),
a slit (72) is provided in a bottom portion arc direction of the spring case (7), an L-shaped end portion slit (72a) is provided at an end portion of the slit (72), and on the outer sides of left and right wall portions of the spring case (7), boss portions (73) are provided to project and fitting projection portions (74) are provided to project,
positioning recesses (26a) are provided on left and right inner wall portions of the spring case storing portion (26), and
when mounting the spring case (7), the fitting projection portions fit (74) the positioning recesses (26a), and the boss portions (73) fit the insides of the shaft holes (22) provided in the hinge body (21).

4. The assist grip according to Claim 3, wherein
a substantially cylindrical oil damper (8) is disposed inside the bearing portions (35) of the other hinge body (31),
the oil damper (8) is stored in an oil damper storing portion (36) provided on an axis between the left and right shaft holes (32) formed in the bearing portions (35) of the other hinge body (31),
at each of tip end axial support positions of an inner cylinder (82) of the oil damper (8), a lock claw receiver (83) is provided and a pair of lock projection portions (84) are provided at an interval, and on side walls of the oil damper storing portion (36), guide recesses (36a) are provided and lock claws (36b) are provided, and
when the oil damper (8) is stored in the oil damper storing portion (36), the lock projection portions (84) enter and fit the guide recesses (36a), and the lock claws (36b) are locked in the lock claw receivers (83).

5. The assist grip according to Claim 4, wherein at axial support positions on both ends of the inner cylinder (82) of the oil damper (8), recessed lock claw receivers (83) are provided, and at positions on both sides of the lock claw receiver (83), a pair of lock projection portions (84) are provided to project.
